# FASCICULE DE BREVET EUROPEEN

(11) **EP 1 232 881 B1**
(45) Date de publication et mention de la délivrance du brevet: **29.10.2008**
(21) Numéro de dépôt: 02290092.2
(22) Date de dépôt: 15.01.2002
(51) Int. Cl.: B60C 23/00

(54) **Système de régulation de la pression régnant dans une capacité, telle une roue de véhicule**
Regelsystem für den Druck in einer Kapazität, wie ein Fahrzeugrad
Regulation system for the pressure in a closed volume, such as a vehicle wheel

(30) Priorité: 16.02.2001 FR 0102167
(43) Date de publication de la demande: 21.08.2002
(73) Titulaire: NEXTER Mechanics, 78000 Versailles (FR)
(72) Inventeur: Marquaire, Michel, 78000 Versailles (FR)
(74) Mandataire: Célanie, Christian

(56) Documents cités:
- EP-A- 1 044 828
- US-A- 5 629 873

## Description

Le secteur technique de la présente invention est celui des systèmes de réglage et de contrôle d'une pression régnant dans une capacité et elle vise plus particulièrement le cas des pneumatiques d'un véhicule.

Dans le domaine d'application préféré ci-dessus, on a déjà proposé d'intégrer dans une capacité une valve pneumatique destinée principalement au gonflage et au dégonflage de la capacité. La valve est pilotée par un bloc de commande pneumatique comportant une alimentation d'air comprimé et des électrovannes. Pour plus de précision, on pourra se reporter aux brevets EP-0246953 et EP-0296017.

Or la simple commande du gonflage et du dégonflage d'une capacité n'est plus satisfaisante aujourd'hui car les utilisateurs souhaitent pouvoir intervenir directement sur la pression régnant dans la capacité en fonction non seulement de l'état du terrain parcouru par le véhicule mais aussi de nombreux autres paramètres comme celui de la charge de ce véhicule et de pouvoir détecter une anomalie quelconque de la capacité. De plus, le remplacement d'une capacité modifie les données du système, ce qui ne peut pas être effectué par le conducteur mais par un atelier spécialisé. Il est donc impératif que la capacité puisse être contrôlée à tout moment même après un échange.

On connaît également le brevet EP1044828 étant le document le plus proche qui décrit un système de régulation de la pression régnant dans un pneumatique alimenté par une vanne de gonflage et de dégonflage. Ce système comporte une vanne de gonflage/dégonflage, des capteurs de pression disposés dans les pneumatiques, qui transmettent par radio fréquence la valeur mesurée et un ou plusieurs capteurs de charge mesurant la charge appliquée au véhicule ou à une portion du véhicule.

Cependant, ce système ne comporte pas de capteur annexe de mesure de la pression permettant d'effectuer une seconde lecture de la pression et de s'affranchir de la permutation de roues.

C'est le but de l'invention que de proposer un système fiable de régulation de la pression dans une capacité et de contrôler en permanence et, ce, automatiquement l'état de ladite capacité.

L'invention a donc pour objet un système de régulation de la pression régnant dans un ensemble tournant comprenant une capacité alimentée par une vanne de gonflage, de dégonflage et de mesure connectée à un joint tournant, un capteur de pression et de température en communication avec l'intérieur de la capacité, et un ensemble fixe comprenant un bloc pneumatique alimenté en air sous pression par un ensemble de gonflage, un ensemble électrique ou électronique renfermant des moyens de contrôle de la pression régnant dans la capacité, un moyen de pilotage de l'ensemble électrique ou électronique et un clavier,
**caractérisé en ce qu**'il comprend un capteur annexe de mesure de la pression intégré dans l'ensemble fixe pour assurer les fonctions de contrôle ou de commande prévues par la logique de pilotage, ledit système commandant la valeur de la pression de la capacité entre une valeur minimale et une valeur maximale en fonction d'une logique de commande en relation avec les conditions extérieures auxquelles la capacité est soumise à l'aide du capteur de pression et à l'aide du capteur annexe pour assurer un contrôle permanent de la valeur de ladite pression régnant dans ladite capacité.

Avantageusement, le capteur annexe est intégré dans l'ensemble électrique ou électronique.

Selon une réalisation avantageuse de l'invention, le bloc pneumatique comporte au moins une électrovanne de gonflage, au moins une électrovanne de dégonflage et au moins un Venturi.

Selon une caractéristique de l'invention, le système comporte un clapet piloté incorporé dans chaque capacité permettant de réaliser à la demande soit un dégonflage lent soit un dégonflage rapide en fonction de l'ordre donné à la vanne.

Avantageusement, lors du dégonflage lent, le clapet piloté met en communication l'intérieur de la capacité à travers la vanne avec une ouverture calibrée débouchant à l'extérieur.

Selon encore une autre caractéristique de l'invention, le moyen de commande se présente sous la forme d'un boîtier électrique ou électronique renfermant des moyens logiques de commande séparés ou intégrés au bloc pneumatique.

Selon encore une autre caractéristique de l'invention, le clavier comporte des indicateurs de l'état de chaque capacité visibles par un opérateur et des moyens afficher une correction ou une valeur de consigne de la pression régnant dans la capacité.

Selon encore une autre caractéristique de l'invention, le clavier est intégré dans un pupitre de commande multifonction installé dans la cabine du véhicule.

Selon encore une autre caractéristique de l'invention, le système comprend des moyens permettant d'assurer une compensation de gonflage d'une capacité préalablement détectée comme mise à l'air libre et de localiser ladite capacité.

Selon encore une autre caractéristique de l'invention, le système comprend des moyens permettant de détecter la mise à l'air libre d'une capacité et de localiser ladite capacité.

Selon encore une autre caractéristique, le système comprend des moyens permettant d'assurer une compensation de gonflage d'une capacité préalablement détectée comme mise à l'air libre et de localiser ladite capacité.

Avantageusement, le bloc pneumatique ainsi que l'ensemble électrique ou électronique sont intégrés sur le châssis ou dans l'environnement moteur du véhicule et l'ensemble de commande et le clavier sont disposés dans la cabine dudit véhicule, ledit système étant appliqué aux roues du véhicule.

Avantageusement encore, l'ensemble électronique est intégré dans l'habitacle d'un véhicule et l'ensemble de commande et le clavier sont disposés dans la cabine d'un véhicule.

Le clavier peut être solidaire du moyen de commande.

Le bloc pneumatique de commande peut être solidaire de l'ensemble électrique ou électronique de commande.

Avantageusement, le bloc pneumatique et l'ensemble électrique ou électronique peuvent être disposés soit sur la remorque d'un véhicule, soit sur un tracteur tout en étant piloté par un ensemble de commande et un clavier disposés dans l'habitacle du tracteur.

Le système peut comprendre un indicateur de survitesse.

Dans une application du système de régulation, on adapte la pression à une commande relative à l'état de charge du véhicule, à pleine charge, à demi charge ou à vide et ce pour chaque type de terrain.

Dans une autre application du système de régulation, on adapte automatiquement la pression des différents pneumatiques à une information spécifique relative à l'état de charge du véhicule et ce pour chaque type de terrain.

Un tout premier avantage du système selon l'invention réside dans la possibilité de détecter tout écart de gonflage d'une capacité, tel un pneumatique, par rapport à une consigne donnée.

Un autre avantage réside dans le fait que le système permet d'isoler une capacité du reste de l'installation en cas d'avarie grave.

Un autre avantage du système selon l'invention réside dans le fait qu'une capacité peut être changée sans aucune perturbation de fonctionnement, le système restant opérationnel.

Un autre avantage réside dans le fait que le système permet d'adapter la pression dans la capacité à toute nouvelle consigne liée à l'acquisition automatique ou manuelle d'informations telle la charge du véhicule, la nature du terrain, les conditions d'adhérence et le freinage d'urgence.

Un autre avantage de l'invention réside dans le fait que l'opérateur peut à tout moment imposer une consigne différente de la consigne imposée automatiquement.

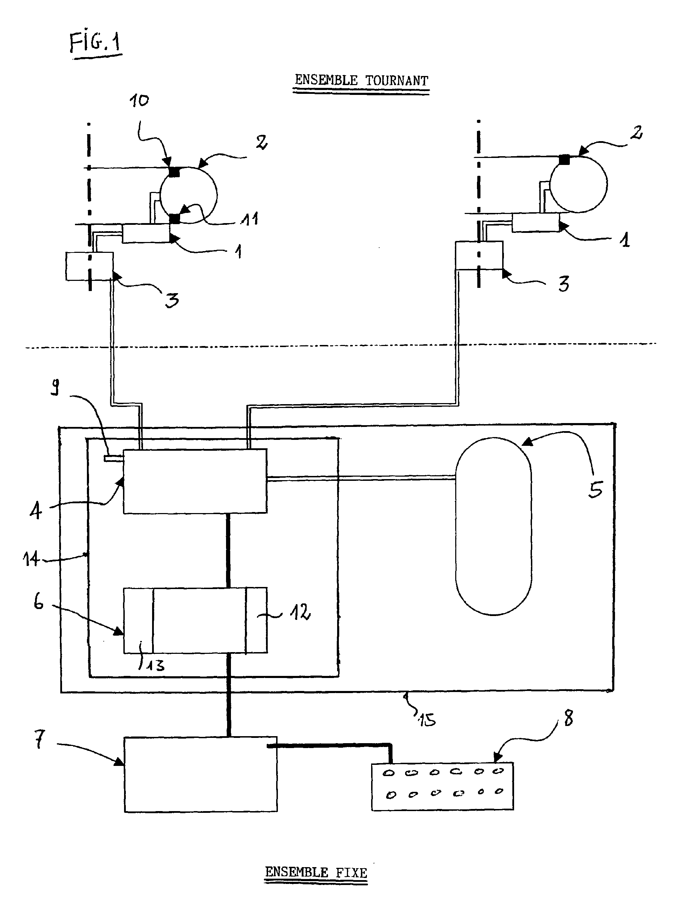

D'autres caractéristiques, détails et avantages de l'invention ressortiront plus clairement à la lecture du complément de description donné ci-après à titre indicatif en relation avec un dessin dans lequel la figure 1 est une vue schématique du système selon l'invention.

Dans la présente description, on entend par ensemble tournant l'ensemble de tous les composants intégrés dans la capacité (ou une roue de véhicule), mais également les composants proches comme par exemple le joint tournant qui est intégré dans le moyen de la roue. On entend à l'inverse par ensemble fixe touts les autres composants du système qui sont soit fixés sur le châssis du véhicule soit dans la cabine de ce véhicule, c'est-à-dire l'ensemble des composants éloignés de la roue. La description vise le système particulier selon la présente invention et il va de soi que les éléments connus et leur positionnement précis ne sont pas décrit en détail et pour plus de précision on pourra se reporter aux réalisations antérieures.

Sur la figure 1, on a représenté une vanne 1 montée sur une capacité 2 en l'occurrence le pneu d'un véhicule automobile constituant globalement l'ensemble fixe. Ce véhicule est quelconque par exemple une voiture, un camion, un véhicule tout terrain ou un véhicule militaire. Cette vanne est connectée, par l'intermédiaire d'un joint tournant 3, à un ensemble fixe comprenant un bloc pneumatique 4 lui-même connecté à une source d'air comprimé 5 qui peut être soit un compresseur soit un accumulateur d'air. Cette réalisation est très classique et pour plus de précision on peut se reporter aux brevets cités précédemment. Dans la suite de la description, on mentionnera par commodité plus spécifiquement une roue ou un pneumatique de véhicule sans que cela puisse être considéré comme une restriction de la portée de l'invention.

Bien entendu, il y a autant de vannes que de roues. Autrement dit pour un véhicule à huit roues, chaque roue sera équipée d'une vanne 1. Toutes les vannes seront alimentées en air à l'aide du même bloc pneumatique et du même accumulateur 5 ou d'un bloc pneumatique et d'un accumulateur indépendant.

Selon l'invention, on adjoint à ces moyens connus un système de régulation incorporant un capteur annexe permettant de contrôler la pression et de la faire varier automatiquement dans la roue 2 en fonction d'un certain nombre de critères tels la charge transportée ou l'état du terrain entre une valeur minimale et une valeur maximale. Pour chaque type de véhicule, on pourra définir par construction un seuil minimum de pression et un seuil maximum, la régulation par le système selon l'invention étant appliquée entre ces deux seuils.

On comprend qu'une telle possibilité offerte aux utilisateurs de véhicule soit souhaitée. En effet, la structure d'un véhicule n'est pas sollicitée de la même manière lorsque celui-ci est à pleine charge, à demi charge ou à vide. Il en est de même lorsque ce véhicule roule sur un terrain accidenté, sur du sable, sur route ou sur autoroute. De même sur une route donnée, les conditions extérieures peuvent influencer grandement le comportement de la roue, par exemple en cas de verglas ou de freinage brutal. Une intervention sur la pression de gonflage permet de réduire ces sollicitations et de les ramener à un niveau compatible avec une durée de vie plus importante du véhicule. D'autre part, il s'avère indispensable de connaître à tout moment l'état des pneumatiques du véhicule en particulier en cas de crevaison ou en cas d'avarie irrémédiable dans le but de déterminer s'il s'avère possible d'adopter une mesure corrective.

Ce système comprend un ensemble ou boîtier électrique ou électronique 6, un moyen ou boîtier de pilotage 7 et un clavier 8.

Le bloc pneumatique 4, par exemple sous la forme d'un boîtier, renferme au moins une électrovanne de gonflage et au moins un dispositif permettant d'obtenir une pression régulée pouvant être négative grâce à un Venturi (non représentés). Associé au boîtier électrique ou électronique 6 qui dispose au moins d'un dispositif de lecture de la pression 12 ou capteur annexe, cet ensemble permet d'assurer toutes les fonctions de contrôle ou de commande prévues par la logique de pilotage. Le capteur annexe 12 peut être intégré également au niveau du bloc 4 ou placé sur une liaison entre le bloc 4 et le boîtier 6.

Cet ensemble formé par le bloc 4 et le boîtier 6 permet de gonfler ou de dégonfler la roue 2 ou selon le cas un groupe de roues, d'assurer une surveillance automatique de la ou des roues par un affichage permanent de la pression sur le clavier 8, d'ajuster automatiquement la pression de la roue en fonction d'une consigne, détecter et localiser une roue mise à l'air libre, de compenser cette mise à l'air libre, d'isoler du reste du système une roue si la pression de celle-ci n'est pas compensable par le gonflage, de prendre en compte une information de survitesse et de corriger la pression.

Bien entendu, cet ensemble comporte des moyens électroniques 10 permettant la détection de la pression et de la température intégrés dans la roue 2 ou disposés à distance.

Le boîtier de commande 6 est un boîtier électrique ou électronique renfermant des moyens 13 permettant d'initier chacune des actions nécessaires au fonctionnement du système. Il s'agit donc d'une série de contacteurs, d'instructions ou de programmes permettant de réaliser l'ordre donné par le boîtier de pilotage 7 et d'obtenir un affichage au niveau du clavier 8 représentatif de cet ordre. Ainsi, si on veut gonfler la roue 2 suivant une consigne préétablie suite par exemple à un passage d'un terrain mou à une route, on commande l'ouverture d'une ou plusieurs électrovannes ou équivalent du bloc pneumatique 4 pour mettre en communication la source de pression 5 avec la roue 2. Lorsque la valeur de consigne est atteinte, c'est-à-dire lorsque l'écart entre les deux valeurs en cause est nul, le boîtier 6 commande la fermeture des électrovannes considérées. Un processus analogue est adopté pour assurer le dégonflage de la roue 2 lorsque l'ordre est donné. Il en est de même lorsqu'on souhaite contrôler la pression ou la température d'une roue 2 et la comparer avec l'information transmise par le moyen 10. Le capteur annexe 12 de pression inclus dans l'ensemble 6 (ou dans le bloc pneumatique 4) est mis en communication avec la roue 2 par l'ouverture d'un jeu d'électrovannes ou équivalents et la valeur mesurée par l'ensemble 6 est comparée avec l'information transmise par le moyen 10 et éventuellement affichée au niveau du clavier 8 après traitement ou transmission par le moyen de pilotage 7.

Un contrôle régulier de l'accumulateur de pression 5 est prévu pour vérifier son bon fonctionnement et mesurer la pression d'air présente dans celui-ci. Ainsi pour une pression dans la roue 2 allant jusqu'à 800 kPa, la pression dans l'accumulateur devra se situer par exemple entre 900 et 1 000 kPa. Si la pression dans l'accumulateur devient inférieure à celle d'une roue, le système continue à fonctionner suivant un mode dégradé dans lequel le gonflage n'est plus possible, les autres fonctions étant disponibles tout en affichant un message d'alerte au conducteur par exemple sur le clavier 8.

Le clavier 8 peut comporter des indicateurs de l'état de la roue visibles par un opérateur et des moyens pour afficher une correction ou une valeur de consigne de la pression régnant dans la roue. Ce clavier peut comporter par exemple un indicateur par seuil de pression fonction du terrain et de la charge du véhicule, à savoir pleine charge, demi-chargee ou à vide, un indicateur de la charge elle-même, un indicateur d'anomalies de l'accumulateur de pression, un indicateur d'anomalies d'une partie du système, un indicateur de la localisation de la roue mise à l'air libre, un indicateur de l'état de la roue endommagée tel une crevaison compensable par un gonflage permanent ou impossible à compenser. Tous ces indicateurs sont initiés par le boîtier électronique 7 ou à l'inverse la valeur affichée par un opérateur sur le clavier 8 est transmise par le boîtier de pilotage 7 vers le boîtier 6 qui commande à son tour l'organe sélectionné.

Dans une réalisation particulière de l'invention le boîtier électrique ou électronique 6 et le boîtier 7 sont intégrés dans l'habitacle d'un véhicule et le clavier 8 est disposé dans la cabine. Mais on peut également intégrer l'ensemble électrique ou électronique 6 sur le châssis du véhicule et le boîtier de pilotage 7 et le clavier 8 sont alors disposés dans la cabine.

Dans une autre variante de réalisation, le clavier 8 peut être rendu solidaire du boîtier de commande 7.

Dans une autre variante de réalisation, le boîtier électrique ou électronique 6 peut être intégré dans le bloc pneumatique 4 pour constituer un actionneur 14 de la vanne 1 ou bien de la vanne 1 et du clapet 11. Dans certaines configurations, l'actionneur 14 peut être dédié à une seule capacité ou à un nombre de capacités correspondant au nombre d'essieux, de roues ou de pneus du véhicule sur lequel le système est monté. L'actionneur 14 peut aussi intégrer l'ensemble d'alimentation en air sous pression avec sa capacité de stockage d'air comprimé 5 ou même de production de cet air comprimé pour constituer un actionneur 15 de la vanne ou de la vanne 1 et du clapet 11.

Dans cette variante de réalisation, l'actionneur 14 ou l'actionneur 15 peuvent être intégrés sur le châssis du véhicule ou dans son environnement moteur ou dans la cabine.

Dans une autre variante de réalisation, le moyen de pilotage 7 peut être connecté selon des protocoles portés par un réseau de communication standardisé à l'ensemble électrique ou électronique 6, à l'actionneur 14 ou à l'actionneur 15.

Dans une autre variante de réalisation, le boîtier électrique ou électronique 6 peut être intégré dans le boîtier de pilotage 7.

Les moyens permettant de détecter la mise à l'air libre d'une roue et de localiser ladite roue sont constitués soit par le bloc pneumatique 4 qui intègre le moyen de lecture de la pression dans la roue, soit par le ou les moyens électroniques 10 permettant la détection de la pression et de la température intégrés dans la roue, soit par les deux systèmes en mode combiné.

Le système peut comprendre un indicateur de survitesse. Ceci peut s'avérer important lorsque la pression nominale affichée des pneumatiques n'est pas en corrélation avec la vitesse du véhicule. Le système selon l'invention comprend des moyens pour comparer la vitesse du véhicule par rapport à la vitesse maximale autorisée pour la pression nominale affichée. L'indicateur correspondant sur le clavier est alimenté et le conducteur du véhicule est prévenu de cette situation. Il peut alors corriger la consigne de gonflage jusqu'à disparition du signal de survitesse. Si le conducteur n'intervient pas au bout d'un temps donné, une séquence de correction automatique de la pression de gonflage est déclenchée en référence à un abaque de vitesse intégrée dans le boîtier 7 au moment de la livraison du système. Le gonflage de la roue ou des roues est ainsi assuré à la valeur de pression conforme à la vitesse du véhicule.

Le système selon une variante de l'invention peut assurer à la fois un dégonflage lent et un dégonflage rapide. Par dégonflage lent, on entend par exemple un dégonflage de 2,5.10⁵ Pa à 2.10⁵ Pa en 5 mm. Par dégonflage rapide, on entend par exemple un dégonflage de 2,5.10⁵ Pa à 1.10⁵ Pa en 5 s. A cette fin, on prévoit soit des vannes 1 assurant un dégonflage rapide et soit des vannes 1 et des clapets pilotés 11 intégré dans la roue et commandés par le boîtier 6 ou par le boîtier 7 pour assurer le dégonflage lent. Le dégonflage lent peut être également assuré par le clapet piloté 11 mettant en communication l'intérieur de la capacité 2 à travers la vanne 1 avec une ouverture calibrée 9 débouchant à l'extérieur. Si le dégonflage rapide peut s'avérer important en cas de route glissante ou de freinage d'urgence pour adapter rapidement l'adhérence du pneumatique au besoin, le dégonflage lent peut s'avérer utile pour assurer une parfaite maîtrise de la dynamique du véhicule pendant les phases de dégonflage.

Diverses modifications sont envisageables. La valeur de consigne régnant dans une capacité peut être ajustée par des ordres communiqués par le clavier 8 ou de paramètres tels que la charge du véhicule, la mesure de déflexion de la capacité, la vitesse du véhicule, la détection de pluie ou de verglas ou même la localisation du véhicule.

Le système peut intégrer des paramètres de sécurité interdisant toute opération de correction de la pression de la capacité 2 dans le cas où l'ensemble de gonflage alimente un système prioritaire et qu'il ne dispose pas de puissance suffisante pour assurer le fonctionnement des deux systèmes, toute opération de réduction rapide de la pression de la capacité lorsque les conditions requises ne sont pas remplies, ou refusant la prise en compte d'un ordre manuel de réduction de la pression de la capacité 1 lorsque la vitesse du véhicule doté du système ne le permet pas.

Le système peut intégrer des alertes de l'utilisateur lorsque la consigne reçue de niveau de pression de la capacité n'est pas suffisamment élevée par rapport à la vitesse réelle du véhicule et qu'il ajuste automatiquement ce niveau de pression à la valeur correspondante à la vitesse réelle du véhicule, si après quelques secondes le véhicule n'a pas ralenti.

Comme il ressort de ce qui précède, le système selon l'invention permet un contrôle total supplémentaire de chaque pneu ou capacité. En effet, le fait de prévoir un capteur annexe 12 intégré dans le bloc pneumatique 4 ou dans l'ensemble électrique ou électronique 6 permet une mesure de la pression dans chaque indépendamment du capteur déjà intégré dans chaque roue. On réalise ainsi une identification de chaque pneu 2 connecté au bloc pneumatique permettant de supprimer toute opération externe spécifique d'identification après échange ou remplacement du pneu et de pouvoir réaliser sans équivoque les opérations de contrôle ou d'adaptation de la pression dans le pneu en cause. En effet, chaque pneu muni de son capteur de pression est identifié par le système qui doit gérer toute modification. Lorsque cette modification intervient, il faut entreprendre des opérations de reprogrammation afin que le système reconnaisse les changements intervenus. Ces opérations sont réalisées par un spécialiste et non pas par le conducteur ou l'utilisateur du véhicule. En prévoyant au moins un capteur annexe au niveau du bloc 4 ou de l'ensemble électronique 6, en dehors des roues, la fiabilité du système de régulation est augmentée et devient autonome vis-à-vis des changements de roues qui se produisent inévitablement.

L'actionneur 14 ou 15 peut intégrer une logique de régulation basée sur une valeur de consigne préférentielle issue d'un capteur de déflexion par exemple.

## Revendications

1. Système de régulation de la pression régnant dans un ensemble tournant comprenant :
- une capacité (2) alimentée par une vanne (1) de gonflage, de dégonflage et de mesure connectée à un joint tournant (3),
- un capteur (10) de pression et de température en communication avec l'intérieur de la capacité,
- et un ensemble fixe comprenant :
- un bloc pneumatique (4) alimenté en air sous pression par un ensemble de gonflage (5),
- un ensemble électrique ou électronique (6) renfermant des moyens de contrôle de la pression régnant dans la capacité (2),
- un moyen de pilotage (7) de l'ensemble électrique ou électronique et un clavier (8),
**caractérisé en ce qu'**il comprend
- un capteur annexe (12) de mesure de la pression intégré dans l'ensemble fixe pour assurer les fonctions de contrôle ou de commande prévues par la logique de pilotage,
- ledit système commandant la valeur de la pression de la capacité (2) entre une valeur minimale et une valeur maximale en fonction d'une logique de commande en relation avec les conditions extérieures auxquelles la capacité (2) est soumise à l'aide du capteur (10) de pression et à l'aide du capteur annexe (12) pour assurer un contrôle permanent de la valeur de ladite pression régnant dans ladite capacité.

2. Système de régulation selon la revendication 1, **caractérisé en ce que** le capteur annexe (12) est intégré dans l'ensemble électrique ou électronique (6).

3. Système de régulation selon la revendication 1 ou 2, **caractérisé en ce que** le bloc pneumatique comporte (4) au moins une électrovanne de gonflage, au moins.une électrovanne de dégonflage et au moins un Venturi.

4. Système de régulation selon la revendication 1, 2 ou 3, **caractérisé en ce qu'**il comporte un clapet piloté (11) incorporé dans chaque capacité permettant de réaliser à la demande soit un dégonflage lent soit un dégonflage rapide en fonction de l'ordre donné à la vanne (1).

5. Système de régulation selon la revendication 4, **caractérisé en ce que** lors du dégonflage lent le clapet piloté (11) met en communication l'intérieur de la capacité (2) à travers la vanne (1) avec une ouverture calibrée (9) débouchant à l'extérieur.

6. Système de régulation selon l'une quelconque des revendications précédentes, **caractérisé en ce que** le moyen de commande (6) se présente sous la forme d'un boîtier électrique ou électronique renfermant des moyens logiques de commande séparés ou intégrés au bloc pneumatique (4).

7. Système de régulation selon la revendication 6, **caractérisé en ce que** le clavier (8) comporte des indicateurs de l'état de chaque capacité visibles par un opérateur et des moyens pour afficher et/ou ordonner une correction ou une valeur de consigne de la pression régnant dans la capacité.

8. Système de régulation selon l'une quelconque des revendications précédentes, **caractérisé en ce que** le clavier (8) est intégré dans un pupitre de commande multifonction installé dans la cabine du véhicule.

9. Système de régulation selon l'une quelconque des revendications précédentes, **caractérisé en ce qu'**il comprend des moyens permettant de détecter la mise à l'air libre d'une capacité (2) et de localiser ladite capacité.

10. Système de régulation selon l'une quelconque des revendications précédentes, **caractérisé en ce qu'**il comprend des moyens permettant d'assurer une compensation de gonflage d'une capacité (2) préalablement détectée comme mise à l'air libre et de localiser ladite capacité.

11. Système de régulation selon l'une quelconque des revendications précédentes, **caractérisé en ce que** le bloc pneumatique (4) ainsi que l'ensemble électrique ou électronique (6) sont intégrés sur le châssis ou dans l'environnement moteur d'un véhicule et l'ensemble de commande (7) et le clavier (8) sont disposés dans la cabine dudit véhicule, ledit système étant appliqué aux roues du véhicule.

12. Système de régulation selon l'une quelconque des revendications 1 à 6, **caractérisé en ce que** l'ensemble électronique (6) est intégré dans l'habitacle d'un véhicule et l'ensemble de commande (7) et le clavier (8) sont disposés dans la cabine d'un véhicule.

13. Système de régulation selon l'une quelconque des revendications 1 à 6, **caractérisé en ce que** le clavier (8) est solidaire du moyen de commande.

14. Système de régulation selon l'une quelconque des revendications précédentes, **caractérisé en ce que** le bloc pneumatique de commande (4) est solidaire de l'ensemble électrique ou électronique (6) de commande.

15. Système de régulation selon l'une quelconque des revendications précédentes, **caractérisé en ce que** le bloc pneumatique (4) et l'ensemble électrique ou électronique (6) peuvent être disposés soit sur la remorque d'un véhicule, soit sur un tracteur tout en étant pilotés par l'ensemble de commande (7) et le clavier (8) disposés dans l'habitacle du tracteur.

16. Système de régulation selon l'une quelconque des revendications précédentes, **caractérisé en ce qu'**il comprend un indicateur de survitesse.

17. Application du système de régulation selon l'une quelconque des revendications précédentes, dans laquelle on adapte la pression à une commande relative à l'état de charge du véhicule, à pleine charge, à demi charge ou à vide et ce pour chaque type de terrain.

18. Application du système de régulation selon l'une quelconque des revendications 1 à 16, dans laquelle on adapte automatiquement la pression des différents pneumatiques à une information spécifique relative à l'état de charge du véhicule et ce pour chaque type de terrain.

## Claims

1. Regulation system for the pressure in a revolving assembly that comprises:
- a chamber (2) supplied by an inflation, deflation and measurement valve (1) connected to a revolving joint (3),
- a pressure and temperature sensor (10) that communicates with the interior of the chamber,
- and a fixed assembly comprising:
- a pneumatic unit (4) supplied with pressurised air by an inflation assembly (5),
- an electrical or electronic assembly (6) enclosing control means for the pressure in the chamber (2),
- steering means (7) for the electrical or electronic assembly and a keyboard (8),
**characterised in that** it comprises
- an additional pressure measurement sensor (12) integrated into the fixed assembly to ensure the control and command functions intended by the steering logic,
- said system controlling the value of the pressure in the chamber (2) between a minimal and maximal value as a function of a control logic related to the external conditions to be the chamber (2) is subjected using a pressure sensor (10) and the additional sensor (12) to ensure the constant control of the value of said pressure in said chamber.

2. Regulation system according to Claim 1, **characterised in that** the additional sensor (12) is integrated into the electrical or electronic assembly (6).

3. Regulation system according to Claim 1 or 2, **characterised in that** the pneumatic unit (4) incorporates at least one inflation solenoid valve, at least one deflation solenoid valve and at least one venturi.

4. Regulation system according to Claim 1, 2 or 3, **characterised in that** it incorporates a pilot valve (11) incorporated into each chamber and enabling either a slow deflation or fast deflation to be obtained on demand according to the order given to the valve (1).

5. Regulation system according to Claim 4, **characterised in that** during slow deflation, the pilot valve (11) makes the interior of the chamber (2) communicate via the valve (1) with a calibrated opening (9) discharging out to the exterior.

6. Regulation system according to any one of the above Claims, **characterised in that** the control means (6) is in the form of an electrical or electronic box enclosing control logic means separated from or integrated into the pneumatic unit (4).

7. Regulation system according to Claim 6, **characterised in that** the keyboard (8) incorporates indicators of the state of each chamber that may be visualised by an operator and means to display and/or coordinate a correction or a set value for the pressure in the chamber.

8. Regulation system according to any one of the above Claims, **characterised in that** the keyboard (8) is integrated into a multifunctional control console installed in the vehicle's cab.

9. Regulation system according to any one of the above Claims, **characterised in that** it comprises means enabling the venting of a chamber (2) to be detected and said chamber to be located.

10. Regulation system according to any one of the above Claims, **characterised in that** it comprises means enabling the inflation of a chamber (2) previously detected as having been vented to be topped up and said chamber to be located.

11. Regulation system according to any one of the above Claims, **characterised in that** the pneumatic unit (4) as well as the electrical or electronic assembly (6) are integrated into the chassis or into the engine compartment of a vehicle and the control assembly (7) and keyboard (8) are arranged in the cab of said vehicle, said system being applied to the vehicle's wheels.

12. Regulation system according to any one of Claims 1 to 6, **characterised in that** the electronic assembly (6) is integrated into the passenger compartment of a vehicle and the control assembly (7) and keyboard (8) are arranged in the cab of the vehicle.

13. Regulation system according to any one of Claims 1 to 6, **characterised in that** the keyboard (8) is integral with the control means.

14. Regulation system according to any one of the above Claims, **characterised in that** the pneumatic control unit (4) is integral with the electrical or electronic control assembly (6).

15. Regulation system according to any one of the above Claims, **characterised in that** the pneumatic unit (4) and the electrical or electronic assembly (6) may be arranged either on the vehicle trailer, or on the towing vehicle, whilst being piloted by the control assembly (7) and keyboard (8) arranged in the passenger compartment of the towing vehicle.

16. Regulation system according to any one of the above Claims, **characterised in that** it comprises an overspeed indicator.

17. Application of the regulation system according to any one of the above Claims, in which the pressure is adapted to a command related to the load conditions of the vehicle, fully loaded, partly loaded or with no load, and this for each type of terrain.

18. Application of the regulation system according to any of Claims 1 to 16 in which the pressure in the different pneumatic tyres is automatically adapted to specific data related to the load conditions of the vehicle and this for each type of terrain.

## Patentansprüche

1. System zur Regelung des in einer sich drehenden Einheit herrschenden Drucks, umfassend:
- ein Volumen (2), das durch ein Ventil (1) zum Füllen, Entleeren und Messen versorgt wird, das mit einer Drehdichtung (3) verbunden ist,
- einen Druck- und Temperatursensor (10), der mit dem Inneren des Volumens in Verbindung steht,
- und eine feste Einheit, umfassend:
- einen pneumatischen Block (4), der von einer Auffülleinheit (5) mit Druckluft versorgt wird,
- eine elektrische oder elektronische Einheit (6), die Mittel zur Steuerung des in dem Volumen (2) herrschenden Drucks einschließt,
- ein Mittel zur Ansteuerung (7) der elektrischen oder elektronischen Einheit und eine Tastatur (8),
**dadurch gekennzeichnet, dass** es
- einen Nebensensor (12) zur Messung des Drucks umfasst, der in der festen Einheit integriert ist, um die von der Steuerungslogik vorgesehenen Funktionen zur Überwachung oder Steuerung zu gewährleisten,
- wobei das genannte System den Wert des Drucks des Volumens (2) zwischen einem minimalen Wert und einem maximalen Wert in Abhängigkeit einer Steuerlogik in Bezug auf die äußeren Bedingungen, denen das Volumen (2) ausgesetzt ist, mit Hilfe des Drucksensors (10) und mit Hilfe des Nebensensors (12) steuert, um eine permanente Überwachung des Wertes des in dem genannten Volumen herrschenden genannten Drucks zu gewährleisten.

2. System zur Regelung nach Anspruch 1, **dadurch gekennzeichnet, dass** der Nebensensor (12) in der elektrischen oder elektronischen Einheit (6) integriert ist.

3. System zur Regelung nach Anspruch 1 oder 2, **dadurch gekennzeichnet, dass** der pneumatische Block (4) wenigstens ein Magnetventil zum Auffüllen, wenigstens ein Magnetventil zum Entleeren und wenigstens ein Venturirohr umfasst.

4. System zur Regelung nach Anspruch 1, 2 oder 3, **dadurch gekennzeichnet, dass** es ein gesteuertes Klappenventil (11) umfasst, das in jedem Volumen eingebaut ist, welches es ermöglicht, bei Anforderung entweder ein langsames Entleeren oder ein schnelles Entleeren in Abhängigkeit von dem an das Ventil (1) gegebenen Befehl zu bewerkstelligen.

5. System zur Regelung nach Anspruch 4, **dadurch gekennzeichnet, dass** beim langsamen Entleeren das gesteuerte Klappenventil (11) das Innere des Volumens (2) mit einer nach außen mündenden kalibrierten Öffnung (9) über das Ventil (1) in Verbindung setzt.

6. System zur Regelung nach irgendeinem der vorhergehenden Ansprüche, **dadurch gekennzeichnet, dass** das Steuermittel (6) sich in der Form eines elektrischen oder elektronischen Kastens darstellt, der Logikmittel zum Steuern enthält, die vom pneumatischen Block (4) getrennt oder in ihm integriert sind.

7. System zur Regelung nach Anspruch 6, **dadurch gekennzeichnet, dass** die Tastatur (8) für eine Bedienperson sichtbare Anzeigen des Zustandes jedes Volumens und Mittel zum Darstellen und/oder Anordnen einer Korrektur oder eines Sollwertes des in dem Volumen herrschenden Drucks umfasst.

8. System zur Regelung nach irgendeinem der vorhergehenden Ansprüche, **dadurch gekennzeichnet, dass** die Tastatur (8) in einem multifunktionalen Steuerpult integriert ist, das in dem Führerhaus des Fahrzeugs eingebaut ist.

9. System zur Regelung nach irgendeinem der vorhergehenden Ansprüche, **dadurch gekennzeichnet, dass** es Mittel umfasst, die es ermöglichen, das Drucklossetzen eines Volumens (2) zu detektieren und dieses Volumen zu lokalisieren.

10. System zur Regelung nach irgendeinem der vorhergehenden Ansprüche, **dadurch gekennzeichnet, dass** es Mittel umfasst, die es ermöglichen, eine Auffüll-Kompensation eines Volumens (2) zu gewährleisten, das vorab als drucklos detektiert wurde, und dieses Volumen zu lokalisieren.

11. System zur Regelung nach irgendeinem der vorhergehenden Ansprüche, **dadurch gekennzeichnet, dass** der pneumatische Block (4) sowie die elektrische oder elektronische Einheit (6) am Fahrgestell oder in der Umgebung des Motors eines Fahrzeuges integriert sind und die Steuereinheit (7) und die Tastatur (8) in dem Führerhaus des genannten Fahrzeuges angeordnet sind, wobei das genannte System auf die Räder des Fahrzeuges angewendet wird.

12. System zur Regelung nach irgendeinem der Ansprüche 1 bis 6, **dadurch gekennzeichnet, dass** die elektronische Einheit (6) in die Fahrgastzelle eines Fahrzeuges integriert ist und die Steuereinheit (7) und die Tastatur (8) in dem Führerhaus eines Fahrzeuges angeordnet sind.

13. System zur Regelung nach irgendeinem der Ansprüche 1 bis 6, **dadurch gekennzeichnet, dass** die Tastatur (8) fest mit dem Steuermittel verbunden ist.

14. System zur Regelung nach irgendeinem der vorhergehenden Ansprüche, **dadurch gekennzeichnet, dass** der pneumatische Steuerblock (4) fest mit der elektrischen oder elektronischen Steuereinheit (6) verbunden ist.

15. System zur Regelung nach irgendeinem der vorhergehenden Ansprüche, **dadurch gekennzeichnet, dass** der pneumatische Block (4) und die elektrische oder elektronische Einheit (6) entweder am Anhänger eines Fahrzeuges oder an einer Zugmaschine angeordnet sein können und dabei noch durch die Steuereinheit (7) und die Tastatur (8), die in der Fahrgastzelle der Zugmaschine angeordnet sind, gesteuert werden.

16. System zur Regelung nach irgendeinem der vorhergehenden Ansprüche, **dadurch gekennzeichnet, dass** es eine Anzeige zur Geschwindigkeitsüberschreitung umfasst.

17. Anwendung des Systems zur Regelung nach irgendeinem der vorhergehenden Ansprüche, bei der der Druck an einen Befehl in Bezug auf den Beladungszustand des Fahrzeuges, bei voller Beladung, bei halber Beladung oder leer und zwar für jede Art von Gelände angepasst wird.

18. Anwendung des Systems zur Regelung nach irgendeinem der Ansprüche 1 bis 16, bei der der Druck der verschiedenen Reifen an eine spezifische Information in Bezug auf den Beladungszustand des Fahrzeuges und zwar für jede Art von Gelände automatisch angepasst wird.
